(19) Europäisches Patentamt
European Patent Office
Office européen des brevets

(11) Veröffentlichungsnummer: **0 029 609**
**B1**

(12) # EUROPÄISCHE PATENTSCHRIFT

(45) Veröffentlichungstag der Patentschrift: **30.11.83**

(51) Int. Cl.³: **C 08 F 246/00**, C 08 F 218/02, C 09 D 3/74, C 09 J 3/14

(21) Anmeldenummer: **80107330.5**

(22) Anmeldetag: **25.11.80**

(54) **Wässrige Kunststoffdispersionen, Verfahren zu ihrer Herstellung und ihre Verwendung.**

(30) Priorität: **27.11.79 DE 2947768**

(43) Veröffentlichungstag der Anmeldung: **03.06.81 Patentblatt 81/22**

(45) Bekanntmachung des Hinweises auf die Patenterteilung: **30.11.83 Patentblatt 83/48**

(84) Benannte Vertragsstaaten: **CH DE FR GB LI NL SE**

(56) Entgegenhaltungen:
**DE - A - 1 644 990**
**FR - A - 2 320 318**
**FR - A - 2 320 319**

(73) Patentinhaber: **WACKER-CHEMIE GMBH, Prinzregentenstrasse 22, D-8000 München 22 (DE)**

(72) Erfinder: **Eck, Herbert, Dr., Dipl.-Chem., Burg 11, D-8263 Burghausen (DE)**
Erfinder: **Singer, Robert, Dr., Dipl.-Chem., Hechenbergstrasse 35, D-8263 Burghausen (DE)**

EP 0 029 609 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Wäßrige Kunststoffdispersionen, Verfahren zu ihrer Herstellung und ihre Verwendung

Gegenstand der Erfindung sind wäßrige Kunststoffdispersionen, die vorzugsweise als Bindemittel für Farben und Lacke sowie als Klebstoff Verwendung finden und sich durch eine gute Naßhaftung auf glatten, nicht saugfähigen Untergründen auszeichnen, Verfahren zu ihrer Herstellung und ihre Verwendung.

Bisher war die Verwendung vieler Dispersionsfarben auf glatten, nicht saugfähigen Untergründen wegen ihrer schlechten Naßhaftung erheblich eingeschränkt. Besonders deutlich wird das Problem bei frischen Anstrichen von niedrigpigmentierten Dispersionsfarben, die wegen ihres hohen Bindergehaltes insbesondere dann verwendet werden, wenn der Anstrich abwaschfest werden soll.

Es wurde verschiedentlich, z. B. in den DE-PS 2 535 373, 2 535 374 und 2 628 760 vorgeschlagen, diese Schwierigkeiten, die besonders durch Zusätze von verlaufsfördernden Mitteln, wie Äthylenglykol, Propylenglykol und anderen, noch verstärkt werden, abzuschwächen oder zu umgehen durch Einpolymerisation von Acetessigsäurevinyl- oder -allylestern oder Acetessigsäureestern der allgemeinen Formel:

$$R-CH=C(R)-CO-O-A-CO-CH_2-CO-CH_3,$$

worin $R=H, CH_3$; $A=-(CH_2)_{1-4}-O-$ oder $-(CH_2-CH_2)_{1-3}-O-$ bedeuten.

Für viele Anwendungen ist die hierbei erzielte Verbesserung noch nicht ausreichend. Aufgabe war daher, die Naßhaftung von für die Herstellung von Dispersionsfarben geeigneten Kunststoffdispersionen bei guter Abwaschfestigkeit zu verbessern.

Es wurde nun gefunden, daß wäßrige Kunststoffdispersionen von Copolymerisaten olefinisch ungesättigter Verbindungen diese Aufgabe lösen, wenn sie gekennzeichnet sind durch 0,2 bis 7 Gew.-%, vorzugsweise 0,2 bis 5 Gew.-%, bezogen auf das Gewicht des Copolymerisats, einpolymerisierte Diacetylessigsäureestereinheiten der allgemeinen Formel:

$$(CH_3CO)_2CHCOO(CH_2)_n-CH-CH_2-$$

mit n = 0 und/oder 1.

Copolymerisate, die die genannten Diacetylessigsäureestereinheiten enthalten, sind überraschenderweise denjenigen, die Acetylessigsäureestereinheiten enthalten, auch bei gleichen Molmengen der Diacetyl- bzw. Acetylessigsäureestereinheiten überlegen. Daher genügt es vielfach sogar, wenn lediglich bis 4 Gew.-% dieser Einheiten einpolymerisiert sind.

Dieser Befund ist insbesondere deshalb überraschend, da bekannt ist, daß die zweite, am alpha-Kohlenstoffatom des Acetessigesters sitzende Acetylgruppe bei der Handhabung von Diacetylessigsäureestern sehr leicht hydrolisiert wird. Es wäre also zu erwarten gewesen, daß eine der beiden Acetylgruppen der genannten einpolymerisierten Diacetylessigsäureestereinheiten hydrolisierte und daher bestenfalls das Ergebnis der oben genannten Vorveröffentlichungen zu erreichen gewesen wäre.

Abgespaltene Essigsäure ließ sich überraschenderweise auch nach mehr als halbjähriger Lagerung der erfindungsgemäßen wäßrigen Kunststoffdispersion nicht nachweisen.

Die erfindungsgemäßen wäßrigen Kunststoffdispersionen können hergestellt werden durch Copolymerisation olefinisch ungesättigter Verbindungen in wäßriger Emulsion in Gegenwart von Radikalinitiator, von Emulgator sowie gegebenenfalls Schutzkolloid und gegebenenfalls üblichen Zusätzen. Das Verfahren ist dadurch gekennzeichnet, daß 0,2 bis 7, vorzugsweise 0,2 bis 5, insbesondere bis 4 Gew.-%, jeweils bezogen auf das Gesamtgewicht der Monomeren, an Diacetylessigsäureester(n) der allgemeinen Formel:

$$(CH_3-CO)_2CH-CO-O-(CH_2)_n-CH=CH_2$$

mit n = 0 und/oder 1 mit copolymerisiert werden.

Als olefinisch ungesättigte Verbindungen können alle diejenigen eingesetzt werden, die bisher schon zur Herstellung von Kunststoffdispersionen für niedrigpigmentierte Dispersionsfarben verwendet wurden.

Als Beispiele seien hier aufgeführt: Vinylester organischer Carbonsäuren, deren Kohlenstoffgerüst 1 bis 20 Kohlenstoffatome enthält, Ester der Acryl- oder Methacrylsäure mit $C_1$- bis $C_{20}$-Alkoholen, aliphatische oder vorzugsweise aromatische alpha,beta-ungesättigte Kohlenwasserstoffe, Diester von Maleinsäure oder Fumarsäure, alpha, beta-ungesättigte Carbonsäuren sowie deren Derivate, z. B. Amide, Nitrile, und Vinylhalogenide. Bevorzugt werden Vinylacetat, Vinylpropionat, Isononansäure-Vinylester, Laurinsäure-Vinylester, Methylacrylat, Äthylacrylat, Butylacrylat, 2-Äthylhexyl-Acrylat, Styrol, Vinyltoluol, Dibutylmaleinat, Di-(2-Äthylhexyl)fumarat, Acrylsäure, Crotonsäure, Methacrylsäure, Acrylamid, Methacrylamid, Acrylnitril und Vinylchlorid.

Des weiteren seien noch einige besonders bevorzugte Monomerkombinationen aufgeführt:

Butylacrylat/Methylmethacrylat/Acrylsäure/Acrylamid/Diacetylessigsäureallylester,
2-Äthylhexylacrylat/Butylacrylat/Acrylsäure/Acrylamid/Diacetylessigsäureallylester,
Styrol/Methylacrylat/Acrylsäure/Acrylamid/Diacetylessigsäureallylester,
Styrol/Butylacrylat/Diäthylhexylfumarat/Acrylsäure/Acrylamid/Diacetylessigsäureallylester,
Vinylacetat/Vinylester von in alpha-Stellung verzweigten Carbonsäuren (Versatic®-ester, eingetragenes Warenzeichen der Firma Shell AG)/Diacetylessigsäureallylester,
Vinylacetat/Vinylester der vorstehend beschriebenen verzweigten Carbonsäuren/Butylacrylat/Diacetylessigsäurevinylester,
Vinylacetat/Vinylchlorid/Diacetylessigsäureallylester,
Vinylacetat/Äthylen/Diacetylessigsäureallylester,
Vinylchlorid/Butylacrylat/Diacetylessigsäureallylester.

Zusätzlich zu den genannten olefinisch ungesättigten Verbindungen auch polyfunktionelle Monomere miteingesetzt werden, die eine Vernetzung der Polymeren ermöglichen. Als Beispiele für derartige Monomere seien genannt: Ester von ungesättigten Carbonsäuren mit Alkoholen, die funktionelle Gruppen enthalten, wie Glycidylalkohol, mehrfunktionellen Alkoholen, wie Äthylen-, Propylen- und Butylenglykol, Vinyl- und Allylverbindungen von z. B. Silanen, Glycidylalkohol, Glykolen, Aminoalkoholen, aliphatischen alpha-Chlorcarbonsäuren, Dichlortriazinen, sowie Silylderivate alpha, beta-ungesättigter Carbonsäuren, deren Silylgruppe weitere funktionelle Gruppen tragen, z. B. Acryltrialkoxysilane.

Die erfindungsgemäßen wäßrigen Kunststoffdispersionen werden in an sich bekannter Weise durch Copolymerisation in wäßriger Emulsion in Gegenwart von Radikalinitiator, von Emulgator sowie gegebenenfalls Schutzkolloid und gegebenenfalls üblichen Zusätzen kontinuierlich oder diskontinuierlich hergestellt.

Als Radikalinitiatoren können die bisher bei üblichen Emulsionspolymerisationen eingesetzten Radikalkatalysatorsysteme eingesetzt werden, z. B. wasserlösliche peroxidische und Diazo-Verbindungen, wie Ammoniumpersulfat, Kaliumpersulfat, Ammoniumperoxydisulfat, Kaliumperoxydisulfat, tert-Butylhydroperoxid, Wasserstoffperoxid, Peroxydiphosphate, wie z. B. Kalium-, Natrium- und Ammoniumperoxydiphosphat, gegebenenfalls zusammen mit Reduktionsmitteln. Beispiele für solche Reduktionsmittel sind Natriumsulfit, Natriumbisulfit, Natriumdithionit, Zink- und Natriumformaldehydsulfoxylat. Ebenso eignen sich Wasserstoff/Edelmetallkatalysatoren unter gleichzeitiger Verwendungen geringer Mengen an Schwermetallsalzen als Aktivatoren (DE-PS 1 133 130). Die Polymerisation mit den bekannten Redoxkatalysatorsystemen werden im allgemeinen bevorzugt. Solche geeigneten Redoxkatalysatorsysteme sind unter anderem in »Fundamental Principles of Polymerization« G. F. Alelio, John Wiley and Sons Inc., New York, 1952 auf den Seiten 333 ff. beschrieben.

Reduktions- und Oxidationsmittel können während der Reaktion dosiert werden, es ist aber auch möglich, eine der beiden Komponenten vorzulegen und die andere zu dosieren. Im allgemeinen werden ca. 0,01 bis 0,5 Gew.-%, vorzugsweise 0,03 bis 0,3 Gew.-% an Reduktionsmittel und 0,01 bis 2 Gew.-%, vorzugsweise 0,03 bis 0,8 Gew.-% an Oxidationsmittel, jeweils bezogen auf das Gesamtgewicht der Monomeren, benötigt. Vielfach ist es von Vorteil, Oxidations- und Reduktionsmittel in stöchiometrischen Mengen oder aber das Oxidationsmittel in bis zu 6fachem Überschuß zu verwenden.

Die erfindungsgemäße Copolymerisation wird allgemeinen vorzugsweise bei pH-Werten zwischen 2,5 und 7 durchgeführt. Diese Werte können jedoch auch unter- oder überschritten werden. Der pH-Wert kann zunächst mit kleinen Mengen von Säuren oder Basen eingestellt werden. Vielfach ist es vorteilhaft, Puffersubstanzen zuzusetzen, z. B. Natrium- und Ammoniumbicarbonat, Borax, Natriumacetat und Natriumcitrat sowie Gemische primärer und sekundärer Alkaliphosphate.

Als Emulgatoren können nichtionogene oder anionische Verbindungen einzeln oder im Gemisch eingesetzt werden, z. B. Alkali- oder Erdalkalisalze von alkylierten Benzol- und Naphthalinsulfonsäuren, wie Natriumtolylsulfonat, Alkalialkylsulfonate, wie z. B. Natriumlaurylsulfonat, Salze der Alkylschwefelsäure, wie Natriumlaurylsulfat, Natriumalkylsulfosuccinat, Natriumalkylsulfosuccinathalb- und -vollester, Natrium- und Ammoniumsalze von Sulfatestern von Alkylphenoxypoly(äthoxylen)-äthanolen, wie Octyl- und iso-Nonylphenoxypoly(äthoxylen)äthanolen, deren äthoxylierter Produkten, Äthylenoxidaddukte, wie Alkylglykole und Alkylphenole, Blockcopolymere aus Äthylenoxid und Propylenoxid, sulfonierte Fettsäureamide, Fettalkohol- und Fettamin-Äthylenoxidadditionsprodukte.

Die Emulgatoren werden der Polymerdispersion vorzugsweise in Mengen zwischen 0,5 bis 10 Gew.-% zugesetzt.

Schutzkolloide, die gegebenenfalls zugesetzt werden können, sind z. B. Naturstoffe wie Gummiarabicum, Stärke, Alginate, modifizierte Naturstoffe, wie Methyl-, Äthyl-, Hydroxalkyl- und

Carboxymethylcellulose, synthetische Substanzen wie Polyvinylakohole, teilweise verseiftes Polyvinylacetat, Polyvinylpyrrolidone, und Gemische aus derartigen Stoffen. Bevorzugt werden die modifizierten Cellulose-Derivate und die synthetischen Schutzkolloide.

Die erfindungsgemäßen Dispersionen werden im allgemeinen mit Festgehalten von 20 bis 70 Gew.-%, vorzugsweise 40 bis 60 Gew.-%, bezogen auf das Gesamtgewicht, hergestellt. Sie können, falls dies gewünscht wird, auch mit anderen Dispersionen gemischt werden, im allgemeinen werden sie jedoch allein eingesetzt.

Die erfindungsgemäßen Latices eignen sich z. B. als Kleber zum Beschichten von Papier, Geweben, z. B. Textilien, Glasfasern, von Holz, von Karton, von Asbestzementprodukten, von Zementprodukten und als Bindemittel in Farb- und Mörtelmischungen.

Bevorzugt werden die erfindungsgemäßen Kunststoffdispersionen in Dispersionsfarben mit vorzugsweise ca. 5 bis 30 Gew.-% Pigment eingesetzt.

Diese Dispersionsfarben ergeben besonders abwaschfeste Anstriche, auch wenn diesen Farben zur besseren Verarbeitung als verlaufsfördernde Mittel organische Lösungsmittel zugesetzt werden, insbesondere solche aus der Klasse der mehrfunktionellen Alkohole, z. B. der Glykole.

Als solche organische Lösungsmittel können außer Äthylenglykol und Propylenglykol auch Butylenglykol, Hexylenglykol, Oligoglykole, wie Di- oder Triglykol, Glykol- und Oligoglykoläther, wie Methyl-, Äthyl-, Propyl- und Butyl-mono-, -di- und -triglykoläther, Mono-, Di- und Triglykolester, wie Mono-, Di- und Triglykolacetat, -propionat und -butyrat, (Oligo-)Glykol-halb-äther-halb-ester, wie z. B. Methyl-, Äthyl-, Propyl und Butylmono-, -di- und -triglykolacetat, -propionat und -butyrat oder ihre Gemische verwendet werden.

Die organischen Lösungsmittel werden der Dispersionsfarbe vielfach in Mengen von 3 bis 30 Gew.-%, vorzugsweise 5 bis 15 Gew.-%, bezogen auf das Gesamtgewicht der Farbe, zugesetzt.

Die folgenden Beispiele dienen der weiteren Erläuterung der Erfindung:

Als Dispersionshilfsstoffe wurden eingesetzt:

Emulgator A = Nonylphenolpolyglykoläther
mit ca. 30 Äthylenoxid-Einheiten (Antarox® CO 880)
Emulgator B = Nonylphenolpolyglykoläther
mit ca. 15 Äthylenoxid-Einheiten (Genapol® X 150)
Emulgator C = Natriumisotridecylsulfonat (Mersolat® K 30)

### Beispiele 1 und 2 und Vergleichsversuche A—D

In 290 g entionisiertem Wasser wurden 60 g einer 30gew.-prozentigen wäßrigen Lösung von Emulgator A, 333 g einer 3,6gew.-prozentigen Natriumvinylsulfonatlösung, 1,5 g Natriumacetat und 2,5 g Ammoniumpersulfat eingerührt bzw. gelöst. In diese Mischung wurden dann ca. 10 Gew.-% der aus Tabelle 1 ersichtlichen Monomeren einemulgiert. Durch Erhöhen der Temperatur auf etwa 70 bis 80°C wurde die Polymerisation eingeleitet. Die restlichen Monomeren wurden nun innerhalb von etwa 3 Stunden im Maße ihres Verbrauches kontinuierlich eindosiert. Nach dem Ende der Polymerisation wurde das Gemisch abgekühlt und analysiert (Tabelle 1).

### Beispiele 3 und 4, Vergleichsversuche E bis H

In 330 g entionisiertes Wasser wurden 6 g einer 30gew.-prozentigen Natriumisotridecylsulfonatlösung eingerührt. Nach Aufheizen auf 80°C wurde eine Voremulsion innerhalb von 2 Stunden kontinuierlich zudosiert, die aus 550 g entionisiertem Wasser, 5 g einer 30gew.-prozentigen Natriumisotridecylsulfonatlösung, 9 g Acrylsäure, 18 g Acrylamid, 4,5 g Persulfat und der aus Tabelle 2 ersichtlichen Monomerenmischung hergestellt worden war. Die Eigenschaften der so hergestellten Kunststoffdispersionen sind in Tabelle 2 aufgeführt.

Tabelle 1

| Vergleichsversuch + Beispiele | Vinylacetat | VV 10 | AEA | DAEA | AB | CS | FG | MFT | K-Wert | Haftung auf Glas; 24 h Wasser unpigm. Film | Lenetafolie 24 h Wasser pigm. Film | Alkydhaftung (Naßhaftung) matt | glänzend |
|---|---|---|---|---|---|---|---|---|---|---|---|---|---|
| | g | g | g | g | g | g | % | °C | | | | | |
| A | 480 | 120 | – | – | – | – | 47,5 | 15 | 48 | 4 | 2 | 3 | 3 |
| B | 480 | 120 | 9 | – | – | – | 47,5 | 16 | 84*) | 5 | 3 | 3 | 2 |
| 1 | 480 | 120 | – | 9 | – | – | 47,9 | 15 | 77 | 4 | 1 | 1 | 2 |
| C | 396 | 150 | – | – | 48 | 6 | 48 | 12 | 77,5 | 4 | – | 3 | 3 |
| D | 396 | 150 | 18 | – | 48 | 6 | 48,5 | 11 | 96 | 4,5 | – | 1 | 1 |
| 2 | 396 | 150 | – | 18 | 48 | 6 | 48,8 | 12 | 92,5 | 3,5 | – | 1 | 1 |

*) Leicht trüb.

Abkürzungen:
AEA = Acetessigsäureallylester.
DAEA = Diacetylessigsäureallylester.
AB = Acrylsäurebutylester.
CS = Crotonsäure.
FG = Festgehalt (Gew.-%).
MFT = Mindestfilmbildungstemperatur.
VV 10 = Vinylester einer verzweigten Carbonsäure, wie beschrieben (Veo Va 10, Versatic-10-vinylester).
MMA = Methylmethacrylat.
DAHF = Di-2-äthyl-hexylfumarat.

Tabelle 2

| Vergleichs-versuch + Beispiele | Butylacrylat | MMA | Styrol | DAHF | DAEA | AEA | FG (%) | MFT °C | K-Wert | Alkydhaftung (Naßhaftung) |
|---|---|---|---|---|---|---|---|---|---|---|
| E | 440 | 440 | – | – | – | – | 50 | 15 | 100 | 4 |
| F | 440 | 440 | – | – | – | 18 | 51 | 11 | 98 | 2 |
| 3 | 440 | 440 | – | – | 18 | – | 50 | 12 | 98 | 1 |
| G | 360 | – | 440 | 90 | – | – | 50 | 13 | 52 | 4 |
| H | 360 | – | 440 | 90 | – | 18 | 48 | 11 | 53 | 2 |
| 4 | 360 | – | 440 | 90 | 18 | – | 49 | 13 | 54 | 1 |

Die Beurteilung in den Tabellen erfolgte nach folgendem Schema:

sehr gut = 1
gut = 2
mittel = 3
schlecht = 4
sehr schlecht = 5
von der Platte gelöst = 6
Blasen am Rand = +0,5

Vergleichsversuch I

In einem Autoklaven wurden 100 Gew.-Tl. entionisiertes Wasser und 0,6 Gew.-Tl. Kaliumpersulfat vorgelegt, der pH-Wert auf 3 bis 3,5 eingestellt (Ameisensäure, Ammoniak) und der Luftsauerstoff durch Stickstoff verdrängt. Nach dem Evakuieren und Einstellen der Temperatur auf 35° C wurden unter Rührer 18 Gew.-Tl. Vinylacetat vorgelegt und Äthylen bis zum Gleichgewichtsdruck von 50 bar aufgedrückt. Durch Zugabe von ca. 0,8 Gew.-Tl./h einer 1gew.-prozentigen, wäßrigen Natriumformylsulfoxylatlösung wurde die Polymerisation gestartet und gesteuert. Nach Reaktionsbeginn wurden gleichzeitig innerhalb von ca. 6 Stunden 164 Gew.-Tl. Vinylacetat sowie eine Lösung von 4 Gew.-Tl. Emulgator B, 0,15 Gew.-Tl. Emulgator C, 0,9 Gew.-Tl. Natriumvinylsulfonat, 1,5 Gew.-Tl. Acrylamid und 1,5 Gew.-Tl. Acrylsäure in 42 Gew.-Tl. entionisiertem Wasser zudosiert. Der pH-Wert wurde während der gesamten Polymerisationszeit mit Ammoniak bei 2,6 bis 5 gehalten. Am Schluß der Polymerisation wurde mit Ammoniak der pH auf 7 bis 8 gestellt und das Produkt entgast.

Die Haftung eines bei 100° C getrockneten Films auf Glas war mäßig.

Beispiel 5

Vergleichsversuch I wurde wiederholt mit der Abänderung, daß während der Polymerisation zusätzlich 3,25 Gew.-Tl. Diacetylessigsäureallylester (gelöst im Monomerenzulauf) zudosiert wurden. Die Naßhaftung eines unpigmentierten Films auf Glas verbesserte sich im Vergleich zum Vergleichsversuch I von 4 auf 2 bis 3.

**Patentansprüche**

1. Wäßrige Kunststoffdispersionen auf Basis von Copolymerisaten olefinisch ungesättigter Verbindungen, gekennzeichnet durch 0,2 bis 7 Gew.-%, bezogen auf das Gesamtgewicht des Copolymerisats, einpolymerisierte Diacetylessigsäureestereinheiten der allgemeinen Formel

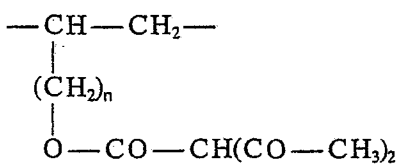

n = 0 und/oder 1.

2. Verfahren zur Herstellung von wäßrigen Kunststoffdispersionen nach Anspruch 1 durch Copolymerisation olefinisch ungesättigter Verbindungen in wäßriger Emulsion in Gegenwart von Radikalinitiator, Emulgator sowie gegebenenfalls Schutzkolloid und gegebenenfalls üblichen Zusätzen, dadurch gekennzeichnet, daß 0,2 bis 7 Gew.-%, bezogen auf das Gesamtgewicht der Monomeren, an Diacetylessigsäureester(n) der allgemeinen Formel

$$(CH_3-CO)_2CH-CO-O-(CH_2)_n-CH=CH_2$$

n = 0 und/oder 1 mitcopolymerisiert werden.

3. Verwendung der wäßrigen Kunststoffdispersion nach Anspruch 1 als Bindemittel in Farben und Lacken.

4. Verwendung der wäßrigen Kunststoffdispersionen nach Anspruch 1 als Klebstoff.

**Claims**

1. Aqueous plastics dispersions based on copolymers of olefinically unsaturated compounds, characterised by from 0.2 to 7% by weight, based on the total weight of the copolymer, of diacetylacetic acid ester units incorporated by polymerisation and of the general formula

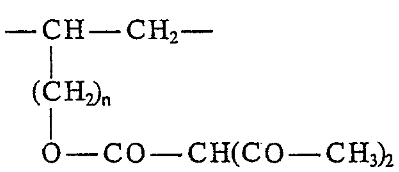

in which n = 0 and/or 1.

2. Process for the manufacture of aqueous plastics dispersions according to claim 1 by

copolymerisation of olefinically unsaturated compounds in aqueous emulsion in the presence of a radical initiator, an emulsifier and, optionally, a protective colloid and, optionally, customary additives, characterised in that from 0.2 to 7% by weight, based on the total weight of the monomers, of diacetylacetic acid ester(s) of the general formula

$$(CH_3-CO)_2CH-CO-O-(CH_2)_n-CH=CH_2$$

in which n = 0 and/or 1, is copolymerised simultaneously.

3. Use of the aqueous plastics dispersions according to claim 1 as binding agents in paints and lacquers.

4. Use of the aqueous plastics dispersions according to claim 1 as adhesives.

**Revendications**

1. Dispersions aqueuses de matières plastiques à base de copolymères de composés éthyléniques, dispersions caractérisées en ce qu'elles contiennent, par rapport au poids total du copolymère, de 0,2 à 7% en poids de motifs, incorporés par polymérisation, d'esters diacétylacétiques répondant à la formule générale:

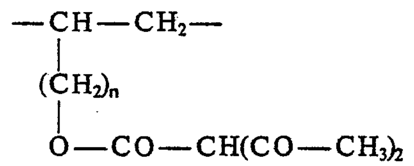

dans laquelle n est égal à 0 et/ou à 1.

2. Procédé de préparation de dispersions aqueuses de matières plastiques selon la revendication 1, par copolymérisation de composés éthyléniques, en émulsion aqueuse, en présence d'un amorceur radicalaire, d'un émulsionnant, éventuellement d'un colloïde protecteur et éventuellement d'additifs usuels, procédé caractérisé en ce qu'on copolymérise en même temps de 0,2 à 7% en poids, par rapport au poids total des monomères, d'un ou de plusieurs esters diacétylacétiques répondant à la formule générale:

$$(CH_3-CO)_2CH-CO-O-(CH_2)_n-CH=CH_2$$

dans laquelle n est égal à 0 et/ou à 1.

3. Application des dispersions aqueuses de matières plastiques selon la revendication 1 comme feuillogènes dans des encres, des vernis et des peintures.

4. Application des dispersions aqueuses de matières plastiques selon la revendication 1 comme colles.